(19) Europäisches Patentamt
European Patent Office
Office européen des brevets

(11) **EP 4 254 325 A1**

(12) **EUROPEAN PATENT APPLICATION**

(43) Date of publication:
**04.10.2023 Bulletin 2023/40**

(21) Application number: **22165506.1**

(22) Date of filing: **30.03.2022**

(51) International Patent Classification (IPC):
***G06T 7/00*** (2017.01)

(52) Cooperative Patent Classification (CPC):
**G06T 7/0004;** G06T 2207/20081; G06T 2207/30141

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Eichler, Roman**
**90451 Nürnberg (DE)**
• **Mallandur, Adarsh**
**91052 Erlangen (DE)**
• **Mehl, Sebastian**
**91074 Herzogenaurach (DE)**

(74) Representative: **Siemens Patent Attorneys**
**Postfach 22 16 34**
**80506 München (DE)**

(54) **INSPECTION OF PRINTED CIRCUIT BOARD ASSEMBLIES**

(57)    A computer-implemented method of inspecting a printed circuit board assembly (1), PCBA, comprising the steps of: obtaining (S1) numerical measurement results (Feat 1, ...Feat n) of one or more inspection types from a plurality of inspection types of an automated optical inspection, AOI, system (10), wherein the numerical measurement results are generated by the AOI system, entering (S2) the numerical measurement results into at least one section (a1, a2, an) of a feature vector (FV) associated with the one or more inspection types, the feature vector (FV) comprising a plurality of sections each of which is associated with a respective inspection type from the plurality of inspection types, selecting (S3) input features (IF) from the feature vector (FV) by dimensionality reduction of the feature vector (FV), inputting (S4) the input features (IF) into a classifier, wherein the classifier is capable of determining an error class (EC) of the PCBA (1) based on the input features (IF), outputting (S5) the error class (EC) as an inspection result of the PCBA (1).

FIG 9

```
┌─────────────────────────────────────────────────────────┐
│        obtaining numerical measurement  results          │──S1
└─────────────────────────────────────────────────────────┘
┌─────────────────────────────────────────────────────────┐
│  entering the numerical measurement results into at least│──S2
│            one section of a feature vector               │
└─────────────────────────────────────────────────────────┘
┌─────────────────────────────────────────────────────────┐
│      selecting input features from the feature vector    │──S3
└─────────────────────────────────────────────────────────┘
┌─────────────────────────────────────────────────────────┐
│        inputting the input features into a classifier    │──S4
└─────────────────────────────────────────────────────────┘
┌─────────────────────────────────────────────────────────┐
│              outputting the error class                  │──S5
└─────────────────────────────────────────────────────────┘
```

EP 4 254 325 A1

**Description**

TECHNICAL FIELD

The present disclosure relates to the inspection of printed circuit board assemblies, PCBAs. Moreover, the present disclosure relates to techniques for verifying the inspection result of an automated optical inspection system.

BACKGROUND

Manufacturing of printed circuit board assemblies may be based on different mounting technologies of components onto a printed circuit board. Firstly, using a so-called surface mount technology, components, such as resistors or diodes, are placed automatically onto the surface of a printed circuit board. Surface mount technology can be applied on small size components and integrated circuits, ICs. Secondly, Thru-Hole Technology, THT, may be used. THT works well with components with leads or wires that have to be mounted on a printed circuit board by plugging them through holes on the printed circuit board. The lead part has to be soldered on the other side of the printed circuit board. THT usually is applied on PCB assemblies containing large components, such as capacitors and/or coils, to be assembled.

Once the components are soldered in place, i.e., after the soldering process, the printed circuit board assembly, PCBA, needs to be tested. Often, movement during the soldering process will result in poor connection quality or a complete lack of a connection. Shorts are also a common side effect of this movement, as misplaced components can sometimes connect portions of the circuit that should not connect. Hence, an inspection of the PCBA produced is necessary.

Automatic optical inspection, AOI, is an inspection method for PCBAs. An AOI system uses one or more cameras to inspect the PCBAs. The cameras may be arranged at different angles to view solder connections. Solder connections of different quality reflect light in different ways, allowing the AOI system to recognize a lower-quality solder. The AOI system does this at a very high speed, allowing it to process a high quantity of PCBAs in a relatively short time. Even when multiple cameras or viewing angles are used, the inspection result of the AOI system may still not be correct and false calls, also known as pseudo errors or false positives, may be obtained as a result from the AOI system.

From European Patent application publication EP3941177A1 a method of inspecting a printed circuit board, PCB, assembly has become known. Therein, a comparison between a finding of the object-based analysis and stored assembly information for the PCB is proposed to identify missing components.

From European Patent application with filing number 20216995.9 it is known to verify the inspection result of an AOI system by using a machine learning model for classification and thereby determining pseudo errors of the AOI system.

From publication Thielen N., Werner D., Schmidt K., Seidel R., Reinhardt A., Franke J.: A Machine Learning Based Approach to Detect False Calls in SMT Manufacturing, 43rd International Spring Seminar on Electronics Technology, ISSE 2020 (Demanovska Valley, 14. Mai 2020 - 15. Mai 2020), In: Proceedings of the International Spring Seminar on Electronics Technology 2020, DOI: 10.1109/ISSE49702.2020.9121044 it is known to use the numerical measurement data generated by the AOI system for model training, testing and validation. Therein, the feasibility of identifying false calls of the AOI system using subsequent machine learning models is investigated. However, problems persist.

SUMMARY

For example, in order to check the PCBAs for which the AOI system has determined a defect, an operator needs to manually inspect the PCBA. Hence, such manual verification requires additional effort. It is thus an object to reduce the effort required for manual inspection by reducing the number of false positives, also referred to as false calls or pseudo errors, determined by the AOI system. It is a further object to perform such verification of the AOI system's inspection result even in case different inspection types are used, i.e., when the AOI system permits a variety of inspection types to be configured.

The object is achieved by the subject-matter defined in independent claims 1 and 10 to 14, respectively.

BRIEF DESCRIPTION OF THE DRAWINGS

Figure 1 shows an illustration of a production line for producing and inspecting printed circuit board assemblies.
Figure 2 shows an illustration of steps performed based on an inspection result of an AOI.
Figure 3 shows an illustration of a verification of the inspection result by a classifier.

Figure 4 shows an illustration of an AOI system and an apparatus communicatively connected to the AOI system, wherein the apparatus serves for verifying the inspection result of the AOI system.

Figure 5 shows an illustration of a feature vector.

Figure 6 shows an illustration of a classifier.

Figure 7 shows an illustration of a confusion matrix of the classifier's error class.

Figure 8 shows an illustration of exemplary steps according to an embodiment.

Figure 9 shows an illustration of exemplary steps according to a first embodiment.

Figure 10 shows an illustration of exemplary steps according to a second embodiment.

Figure 11 shows an illustration of exemplary steps according to a third embodiment.

Figure 12 shows an illustration of exemplary steps according to a fourth embodiment.

Figure 13 shows an illustration of exemplary steps according to a fifth embodiment.

Figure 14 shows an illustration of an apparatus comprising an interface, as well as a processor and a memory.

Figure 15 shows an illustration of exemplary steps according to a sixth embodiment.

## DETAILED DESCRIPTION

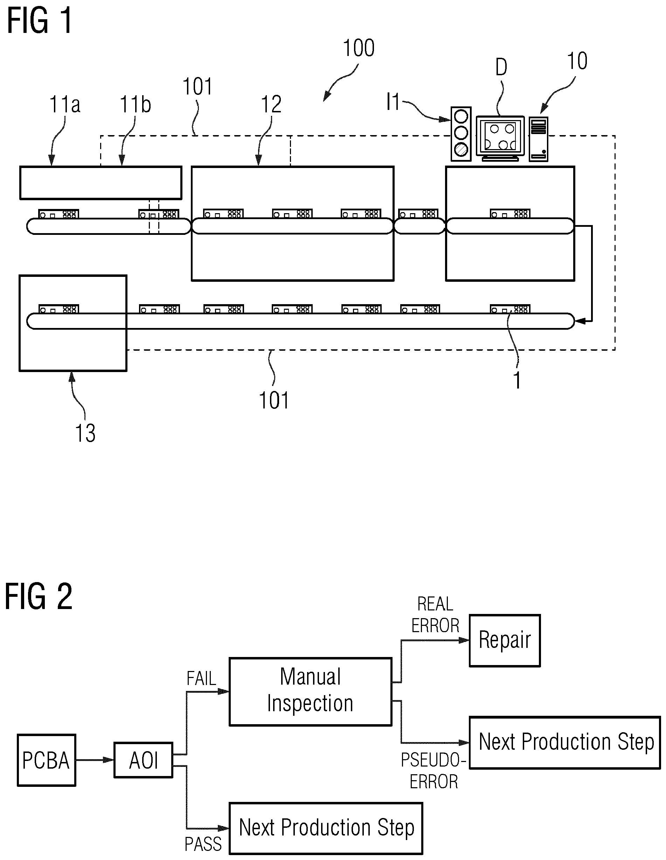

In an electronics production, e.g., production line 100, electrical components are electrically and mechanically connected to a printed circuit board, PCB, e.g., using throughhole technology (THT) or surface mounted technology (SMT), as shown in Figure 1. In most cases, the electrical components are mounted on the printed circuit board at a placement station 11b, such as a manual placement station or with the help of a placement robot, as the case may be. This printed circuit board assembly, PCBA, may be transferred to a conveyor belt. The conveyor belt moves the PCBA along the production (line), e.g., through the soldering station and the subsequent inspection station 10 etc.

Before the placement station 11b solder paste may be applied to the printed circuit board by solder paste printing, e.g., in case SMT is used. Thereafter, the solder paste applied to the printed circuit board may be inspected at a solder paste inspection station 11a. The printed circuit board, together with the mounted electrical components then drives into a soldering station 12, where tin creates an electrically conductive connection between the circuit board and the electrical components. A reflow oven or a wave soldering machine may be used to perform the soldering process. After the soldering process, the PCBA's contact points or solder joints and their characteristics are inspected at the inspection station 10 for quality control. For this purpose, an automated optical inspection, AOI, system may be used. The AOI system includes hardware components for image processing such as a digital sensor, a computer etc. Possible defects that the AOI system at the inspection station 10 is supposed to detect are missing components, crooked components, solder joints with insufficient wetting (cold or open solder joints), or tin bruises, i.e., electrical contacts of solder joints, which should have electrical potential. To that end one or more images of the PCBA are captured and image processing of the one or more images is performed. To that end, numerical measurement values are generated by the AOI system based in the image processing. These numerical measurement values may be compared to respective thresholds to determine one or more defects or errors of the PCBA. If the image processing detects one or more errors on a PCBA, the PCBA is fed via a return route to a diagnostic station 13, for manual inspection. An operator on site then performs a manual (visual) inspection, e.g., via a display D on a diagnostic dashboard. Thus, in general the production of a PCBA requires one or more, i.e., a plurality of, production steps. The quality of the PCBA is determined by these production steps and is checked by the inspection. Depending on the inspection result a malfunctioning PCBA may be repaired or may be scrapped scrapped. Data and control commands can be transmitted between the respective production stations via a data bus 101. To that end, the production stations can be communicatively connected to the data bus 101.

After the soldering step the PCBA production process is finished, and a final inspection will test the PCBA for its functionality. This inspection is known as a "functional test". The test simulates the normal circumstances in which the PCBA will operate. Power and simulated signals run through the PCBA in this test while testers monitor the PCBA's electrical characteristics. If any of these characteristics, including voltage, current or signal output, show unacceptable fluctuation or hit peaks outside of a predetermined range, the PCBA fails the test. The failed PCBA can then be recycled or scrapped, depending on the company's standards.

The AOI system 10 may be operative to provide an inspection result of a printed circuit board assembly 1. The inspection result preferably indicates whether the PCB assembly meets the quality requirements. An inspection result I1 can preferably be represented by "0" or "1" (in binary representation). "0" means, for example, that the respective PCB assembly does not meet the quality requirements and "1" means that the respective PCB assembly meets the quality requirements. Hence, the inspection result indicates, for example, whether all the connections between the components are adequately developed. The inspection result can also indicate whether a PCB assembly will be functional after its production. The inspection result of the AOI system is preferably calculated with the aid of a computer program, the computer program being installed and / or executable on a computing unit such as a processor. This computer program may comprise image processing of the one or more images of the PCBA and may output the numerical measurement results. Based on the inspection result I1 the production of the PCBA can be controlled, e.g., the conveyor belt on which the PCBA is placed can be controlled. The inspection result may also be displayed via a display unit D or a separate signaling apparatus, e.g., in the form of a traffic light system. The inspection result I1 can indicate a faulty or error-free state of the PCB assembly. Additionally, the inspection result may represent a plurality of error classes. For example, an error class can indicate several different faulty states, i.e., errors, of a PCB assembly. In any case, the error class may also be used to indicate a false positive or pseudo error as will be described later.

Turning to Figure 2, the benefits in terms of quality assurance and cost savings of AOI systems depends very much on the competence and working quality of the engineers and operators. This is due to the fact, that parameter tuning of the different types of settings (e.g. camera/vision parameters, inspection algorithms, thresholds) is a truly complex challenge: The difference between images showing correct and faulty components is often only a few pixels and finding the "right" settings, to account for these small signals isn't trivial and might result in "slipping through" of components possessing a defect. That is why engineers tend to be too strict, meaning also that some components will be dropped out during the inspection process and need to be reworked manually at quality station even though they are defect free. Thus, not too seldom, up to 20-30% of inspected PCBAs are being marked "faulty" by the AOI system, where only 10-15% of these faulty marked objects are real errors or true positives. A real error is an error that been manually verified. Hence, there is a constant tradeoff between assuring quality and reducing false calls. This is aggravated by third party factors like external suppliers and variance in productions steps before the inspection which may change and thus force the AOI systems to be updated.

It is obvious, that a huge number of false call classifications by the AOI system slow the manufacturing process, decrease productivity (first pass yield) and increase the overall production costs, mostly due to extra manual efforts of reinspection.

False calls (also known and denoted as pseudo error or false positives) cause non-conformance costs and increase production efforts, since the operator needs to interrupt his current job, e.g., at the solder paste printer, to walk to the AOI system. Furthermore, manual handling of PCBA and unnecessary visual inspection of the product emerge. Manual inspections that repeatedly do not result in successful identification of real errors can lead to elevated slip rates by the operator. Input of the inspection results, i.e., true positve or true negative, into a quality data base also creates extra effort. This results in a reduced Overall Equipment Effectiveness (OEE) since manual inspections require time, can slow down the production, and result in a bottleneck for the whole production (line). Permanent bottlenecks at the AOI system 10 can require more test capacities and can lead to unnecessary investment in technical upgrades or new test equipment. This results in a reduced First Pass Yield (FPY) for example by 15% since every false call by the AOI system reduces the throughput. In addition, manual efforts for optimizing the test programs of the AOI system by test engineers especially for high-mix productions are required.

Many different problems can occur with a PCBA. These include missing components, displaced or twisted wires, usage of an incorrect component, insufficient soldering, excessively thick joints, bent IC pins, and lack of wetting. To remove these defects, careful inspection of the assembled and soldered components is essential. Thus, in order to improve the inspection, the AOI system may be upgraded, by using more modern cameras, using 3D AOI (instead of 2D). But this comes always attached with creating and maintaining inspection libraries, which are controlling up to 100 parameters and consequently come along with a cost of a non-vanishing know-how requirement and complexity. Hence, setting up and (manually) maintaining and fine-tuning AOI inspection algorithms, comprising inter alia the image processing of one or more images of a PCAB, is required. This manual fine tuning of AOI systems is both, time-consuming and requires know-how.

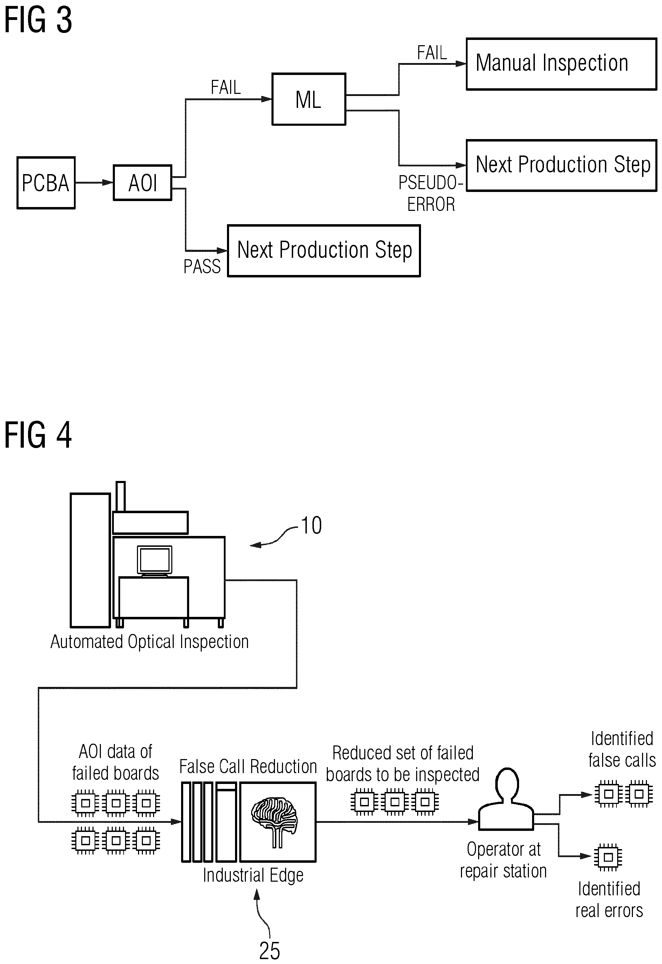

Turning to Figure 3 now, the image(s) of a PCBA (captured by an AOI system) and operator's labels (obtained by a manual inspection) may be used to (re-)train an image-based machine learning model, ML. The machine learning model may serve as a classifier which provides a binary label for a given test object, e.g., a region of interest of an image of a PCBA. It is also possible to use the numerical measurement results of the AOI system instead of the one or more images as described in Thielen N., Werner D., Schmidt K., Seidel R., Reinhardt A., Franke J.: A Machine Learning Based Approach to Detect False Calls in SMT Manufacturing, 43rd International Spring Seminar on Electronics Technology, ISSE 2020 (Demanovska Valley, 14. Mai 2020 - 15. Mai 2020), In: Proceedings of the International Spring Seminar on Electronics Technology 2020, DOI: 10.1109/ISSE49702.2020.9121044.

Hence, in order to reduce the manual efforts at quality inspection and/or at the inspection station a machine learning model may be used which is filtering the initially as erroneous marked PCBAs. Consequently, only these filtered cases are diverted to manual inspection and thereby the effective workload of an operator is reduced. The remaining PCBAs are conveyed without any further delay directly to the next production step. Thereby, the (manual) test effort is reduced or, equivalently, the overall first pass yield (FPY) is increased.

Now, turning to Figure 4, in order to reduce the effort for manual inspection a false call reduction is envisioned which is also scalable, i.e., can be used for different inspection types. Inspection types, may be given by specific set of numerical inspection results (= AOI system outputs). Therein the different numerical inspection results may be obtained by different imaging techniques (when capturing the one or more images of the PCBA) and/or by different image processing algorithms and/or by measuring different object in the image of the PCBA, e.g., measuring different components of the PCBA. For example, a numerical measurement result may be obtained by comparing grey values of pixels in the image(s). The inspection types may be accompanied by or may be equivalent to an error report which is generated and/or output by an AOI system. Since the inspection types may vary according to the configuration of the AOI system there is need to provide a solution for reducing the falls call rate which covers a plurality of inspection types.

To that end, a software application may be logically split into several micro-services, which are running on an apparatus, such as an edge device, and are providing an inspection result and optionally for providing a dashboard for displaying the inspection result.

The inspection of a PCBA may be performed before and/or after the soldering process. This is due to the fact, that numerical measurement results generated by the AOI system are used instead of an image captured by the AOI system. These numerical measurement results are not dependent on the location of AOI system within the production (line).

In any case, the proposed solution, e.g., in the form of a software application, is seamlessly integrated into the process flow and located on an apparatus which may be placed in the vicinity of the of AOI system. For example, a software application on the apparatus receives numerical measurement results, e.g., in the form of one or more files, generated by AOI system as an input. Subservices of the software application, like data transfer, parsing and/or preprocessing - may be provided in order to achieve a compliant data format. Finally, a machine learning model in the form of a classifier may be executed for one or more or for each PCBA under test. The software application comprising the classifier preferably provides a binary output, namely "true error" or "pseudo error". This output may be used to for controlling the production, i.e., initiate or prohibit an action in the production, e.g., by choosing the right track at conveyor belt for the PCBA (under test). Here, pseudo errors are guided without further delay to next production step, whereas real errors are still forwarded to manual inspection. Additionally, the software application may serve for visualizing and reporting the inspection result on a customer dashboard, i.e., a display as described above in connection with Figure 1.

In order to ensure functionality and quality of the software application, log-data of the apparatus and/or numerical measurement results and/or inspection results (form the OAI and/or the from the classifier) can be securely transferred to a cloud storage. This data can then be used for monitoring activities, e.g., functionality of all sub-components, such as the microservices, of the software application, performance of the deployed machine learning model, data-drift checks, and concrete actions, e.g., operator notification, and/or the need for retraining of the machine learning model can be evaluated.

Training of the machine learning model that serves as a classifier can be based on available historical data sets, i.e., numerical measurement results obtained from the AOI system and an error class from the manual inspection station. At first, a data-preprocessor may be trained, the data preprocessor may comprise one or more of the following steps: merging of both data sets (one data set comprising the numerical measurement results and the other data set comprising the corresponding error classes, e.g., as a label for the numerical measurement results), definition of unique identifiers, application of (customer specific) filter conditions, classifier specific preparation and format adjusting of the numerical measurement results, one hot encoding of categorical variables (i.e., the error classes), perform data hierarchical feature building actions.

The purpose of this feature building is to achieve a more comprehensive and generalized data set of information compared to the image-based input. This data set will be used by the machine learning model afterwards to provide a more accurate classification decision and thus inspection result. The numerical measurement results of the AOI system result from analyzing the given one or more images of the PCBA and for PCBA-component-specific details. This image processing determines typical patterns of failures, e.g., due to assembly and/or soldering, and transforms them into numerical measurement results. These numerical measurement results thus carry specific know-how and are thus used for further determining the quality of the PCBA. It should be understood that dependent on the components used and/or the scrutiny of the inspection desired different inspection types may be used and that the AOI system may be configured accordingly to perform said different inspection types.

The numerical measurement results may furthermore be enriched or augmented with meta-information or metadata in order to build a set of features. This additional information enables a better classification result. The metadata may comprise one or more of the following: a (categorical) AOI system error description or error class ("tin missing", "no meniscus", "reversed polarity",...),PCB type, part number, inspection type, component type (preferably not in a raw format, due to a huge number of unique types, but clustered into functional similarity groups, like "resistors", "capacitors", etc.), measurement type ("body"/"component" or "pin" location).

Figure 4 shows an illustration of an AOI system and an apparatus communicatively connected to the AOI system, wherein the apparatus serves for verifying the inspection result of the AOI system. Therein a software application evaluates the PCBAs (more precisely, the corresponding numerical measurement results) that have been determined as faulty by the AOI system. The software application thereby reduces the number of PCBAs to be inspected by the operator at the repair station. The operator then may manually inspect the reduced set of PCBA that also failed verification by the software application and may label the PCBA either as false calls or as real errors and may store these results in a quality database as describe din the above in connection with Figure 1.

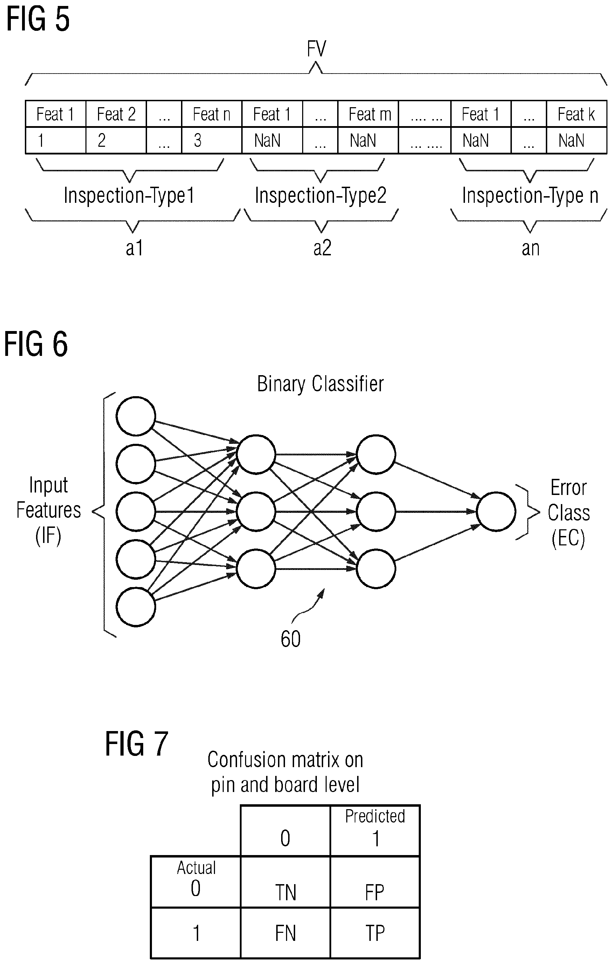

Now turning to Figure 5, in order to enable generalization i.e., make the classification independent of specific inspection types, the following is proposed. For different AOI system inspection types, which come along with a specific set of numerical inspection results (= AOI system outputs), the following reshaping procedure to create a unified global "inspection space" or feature vector is proposed: a feature vector is allocated by concatenation of the numerical measurement results (of one or more inspection types). Therein the non-present inspection features or numerical measurement results are left blank or as NaN. Afterwards the non-present inspection features are filled with mean values. To that end, for different component types, which may come along with varying number of pins, a standardization step is carried out by taking statistical metrics like "min, max, avg, quantiles" and "value counts" for each numerical measurement result and metadata category, respectively.

Finally, the dimension of the feature vector, which is similar to a huge sparse matrix, is reduced, e.g., via principal component analysis, PCA. In general, volume reduction techniques are projecting a set of correlated variables into a smaller set of uncorrelated ones. PCA in specific achieves that by, finding the directions of maximum variance in the original high-dimensional data and projecting them onto a smaller dimensional space. The maximum variance is given for the most frequent inspection types, as they are measured the most and are filling up the corresponding columns in the feature vector. Consequently, a trained dimension reduction may be applied as long as the frequency of inspection types does not change significantly. Still, that case is very unlikely, since firstly, training is done on a huge data set, with saturated frequency numbers. Secondly, retraining of the preprocessing and/or the classifier may take place very often, e.g., as soon as new labels are arriving. Hence, the retraining would account for changed inspection type frequencies. This generalization procedure allows a standardization of the machine learning features, in order to deal with variations from AOI system output.

The output of the preprocessing is a "model ready" data format, i.e., the input features, which will be consumed by a machine learning model, i.e., the classifier.

For training the classifier the following optimization function is provided:

$$\min\ (k*slip\_rate) + \max\ (test\_effort\_reduction)$$

The optimization function modifies the weights and/or bias of the machine learning model, that serves as a classifier.

Therein, both metrics are calculated directly from the confusion matrix, cf. Figure 7, of a binary classifier as follows:

- $slip\ rate = false\ positives\ /\ (false\ positives + true\ negatives)$

- $test\_effort\_reduction = true\ positives/\ (true\ positives + false\ negatives)$

The optimization task is running over a set of parameters, dominantly model parameters and class deciding threshold value. It is further proposed to choose a class unbalance aware classifier, as normally the number of true errors is 10-20 times smaller compared to pseudo errors. For example, cost sensitive classifiers may be used or sampling techniques may be applied to the data. The optimal parameter values are taken for creating the trained machine learning model, i.e., the classifier.

Turning to Figure 6, a (binary) classifier is shown. The classifier is a machine learning model that assigns an output class or group to input features. In the present case the classifier is a binary classifier that classifies the input in two classes, i.e., true error or pseudo error. The output of the classifier may be the probability of a pseudo error. In Figure 6 a neural network is shown but another machine learning model such as a random forest may be used as a classifier. The input features of the classifier are obtained from an AOI system. Specifically, the input features of the classifier are obtained by reducing the dimensionality, e.g., using PCA, of a feature vector. As explained herein, the feature vector is a data construct that comprises a plurality of sections, wherein each section corresponds to an inspection type of the AOI system, preferably all inspection types of the AOI system.

In Figure 7 the confusion matrix of the classifier is shown. based on the confusion matrix the number of true negative, TN, false negative, FN, false positives, FP, and true positives TP can be determined. Based on these results the metrics for the optimization function, cf. above min (k*slip_rate) + max (test_effort_reduction), of the classifier can be calculated and the training and optimization of the classifier can be performed.

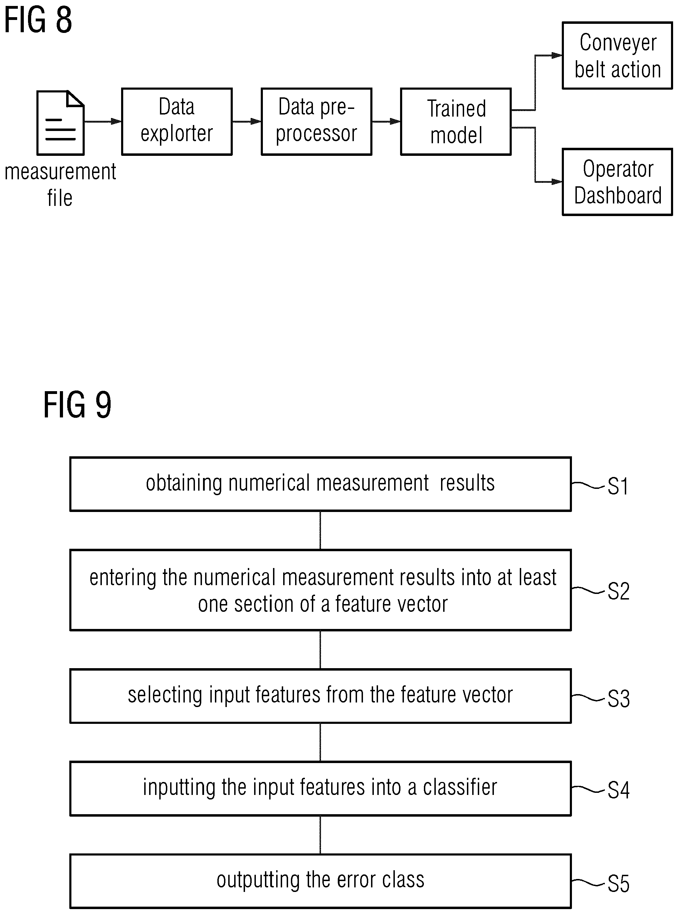

Turning to Figure 8, the operation phase is described in which the software application is deployed on an apparatus, e.g., an edge device. Once a new file comprising numerical measurement results and/or metadata is received by a data exporter, the numerical measurement data and/or the metadata is transformed to a model ready format by the trained data - preprocessor. Finally, the classifier is applied and the error class may be output and may be used for controlling, e.g., the conveyor belt accordingly and/or is visualized on a display and/or an (operator) dashboard as well.

The numerical measurement results are created by the AOI system's internal algorithms from one or more images of a PCBA. This transformation is dependent on a significant number of parameters as described in the above. The calculated numerical measurement results can thus be better understood as "features", which are already applying several logical steps of image interpretation by way of which a check for typical errors of a PCBA is performed. Depending on the AOI system vendor, some of these features already come along like a bunch of granular (sub) inspection tests and all together are creating one single ensemble decision, i.e., the inspection result of the AOI. These features are characterizing certain test object states and consequently, also faulty states come along with specific patterns inside this feature space. That is why, using these numerical measurement results as features and building a logic on top of them provides a benefit.

The proposed solution enables a better scalability over different AOI system inspection types and AOI system vendors. As mentioned before, most AOI systems come along with a certain set of features - and despite being produced by a different logic - from a model input point of view the feature structure is very comparable, so that a general and all inspection types and/or vendors encompassing data standard may be introduced. The solution proposed is set up in that standardized format, i.e., the feature vector, and by this broadens the path to scalability. Images, on the other hand, may be different in format and shape dependent on the inspection type and/or vendor. This is not only valid for different vendors, but is already true for different component types, both inspected by the same AOI system.

Hence, when faced with diverse data input format due to a given and specific AOI system vendor or manufacturer, the measurement space is not fixed but is varying dependent on manufacturer-specific "inspection types". This is overcome by introducing a feature vector, which "standardizes" all the volatile numerical measurements results, and therefore is valid for all inspection types and/or component types. Furthermore, most AOI system manufacturers allow the creation of additional measurements and thus inspection types, going beyond the ones provided ex-factory. This enrichment is crucially necessary in order to allow the machine learning approach to be more precise and meet the demands of a PCBA inspection.

The proposed solution satisfies the individual PCBA production needs and is not only a "one fits it all" machine learning model, which tries to optimize a general accuracy metric (which is not use case customized and moreover not recommended in real-world problems, where class imbalance is present per default). This is achieved by not simply driving a "random search" of hyperparameter tuning, but by performing a use-case specific optimization-based hyperparameter search as will be described in the following.

Firstly, a loss function is chosen: Instead of using a standard (but yet, class imbalance neglecting) cross-entropy loss for training a machine learning model, such as the classifier, an imbalance aware Focal loss may be used, e.g., as described by [Lin et al.in arXiv:1708.02002. This loss is a generalization of cross-entropy loss, which allows to focus more specifically on minority classes by adjusting two more parameters alpha and gamma and by ensuring a more robust class imbalance handling.

Secondly, a customizable hyperparameter for the optimization function is introduced: As shown in the above, in addition to the two metrics "slip" and "test_effort_reduction" a punishing factor k, i.e., the customizable hyperparameter, is specifying the emphasis on minimizing the slip rate. By optimizing this optimization function, we make sure to select the optimal machine learning model, i.e., classifier (parameterization). It should be understood that the optimal machine learning model, or classifier, is of individual nature and depends on personal preferences about acceptance thresholds of the slip rate. In fact, this threshold may even vary for different types of components and related requirements such as safety, e.g., when producing safety-critical or less critical PCBAs).

An AOI system may make use of ultraviolet, x-ray, and infrared rays for inspection. Hence, it has become possible to judge a defect (such as lifted component body/body coplanarity) by measured component height profile or a defect (such as lifted lead/ lead coplanarity) by measured lead shape profile, or a defect (such as solder joint defect) by measured height and volume information of all pixels in the joint area. An AOI system may thus measure the Z dimension of a PCBA including electronic components and solder joints. An AOI system is furthermore capable of providing flags and quantifying the defects such as Missing lead, Offset, Rotation, Polarity, Upside down, OCV, Solder filet, Billboarding, Lifted Lead, Lifted Body, Tombstone, Bridging and more.

The imaging systems of an AOI system may comprise a single camera or there may be more than one camera to provide better imaging and the possibility of a 3D capability. The cameras should also be able to move under software control. This will enable them to move to the optimum position for a given PCB assembly.

However, the problem of false calls persists, e.g., due to a flexible environment of the PCBA production. Furthermore, the PCB itself may be warped, which happened in particular after the soldering process, which leads to a changed component position and thus to false calls.

After the acquisition of the numerical measurement results is completed, the data is exported from the AOI system, e.g., into an ASCII readable format. For example, the numerical measurement results may comprise the components name and a indication whether the result of the inspection is a pass or a fail, i.e. an error class, for example in the form of metadata.

In any case, an AOI system may operate in accordance with a test program. The test program may comprise one or more inspection types to be performed. In order to perform the one or more inspections (of one or more inspection types) different measurements need to be carried out. The test program and thus the inspection types may include a indication of one or more regions of interest on the PCBA. Further information regarding the inspection type may include the PCB type, one or more component types within the region of interest. The test program of the AOI system may then output the numerical measurement results (comprising a quantification of the defects for each of the PCBAs inspected) and the error classes, cf. Table 1 of Thielen N., Werner D., Schmidt K., Seidel R., Reinhardt A., Franke J.: A Machine Learning Based Approach to Detect False Calls in SMT Manufacturing, 43rd International Spring Seminar on Electronics Technology, ISSE 2020 (Demanovska Valley, 14. Mai 2020 - 15. Mai 2020), In: Proceedings of the International Spring Seminar on Electronics Technology 2020, DOI: 10.1109/ISSE49702.2020.9121044.

A mentioned above, the classifier may be a binary classifier, e.g., a preferably balanced, random forest. The classifier may be trained and/or used during the production of PCBAs. The classifier may provide as output an indicator indicating either "true error" or "pseudo error". The output of the classifier may be used as an inspection result, which controls the conveyor (belt). In case of a true error, manual inspection is initiated, whereas in case of pseudo error the next production step may be initiated.

The output of the classifier may relate only to one region of interest, e.g., one object in the PCBA's image (corresponding to a component of the PCBA). However, the inspection result of the classifier can be assigned to the whole PCBA. The information of the classification can be aggregated in various ways with respect to the hierarchy of the data of the PCBA.

As mentioned, the classifier, e.g., in the form of a random forest, is optimized with respect to an optimization function, as described in the above. The training of the classifier may be done in the cloud and the trained classifier and the trained preprocessing may then be deployed on an apparatus such as an edge device.

The verification of the AOI system's inspection result may be initiated once, e.g., an API of the AOI system is ready or an XML file is ready on the AOI system. In order not to interfere with the PCBA production set up, it is preferred that the execution of the verification requires less time than the time period between the inspection of two consecutive PCBAs by the AOI system.

As mentioned in the above subsequent to the verification further tests such as In-Circuit-Test may follow or the PCBA may be mounted in housing of a device to be produced.

Turning to Figure 9 exemplary steps according to a first embodiment are shown. In a step S1, numerical measurement results are obtained. The numerical measurement results belong to one or more inspection types from a plurality of inspection types of an automated optical inspection, AOI, system. The numerical measurement results are generated by the AOI system, e.g., as result of an image processing of one or more images of the PCBA. The images may be captured or acquired by an imaging system of the AOI system.

In a step S2, the numerical measurement results are entered into at least one section of a feature vector. Therein, each section of the feature vector may be associated with a respective inspection type. The AOI system may comprise a plurality of inspection types each comprising one or more measurements yielding a numerical measurement result. Different inspection types differ with respect to the different measurements performed by the AOI system. Each inspection type may be identified by a (unique) identification number. based on the identification number the inspection type may be assigned to the corresponding section in the feature vector. Thus, the feature vector comprises a plurality of sections each of which is associated with a respective inspection type from the plurality of inspection types. The feature vector may be populated with the numerical measurement results which have been performed by the AOI system operating according to a test program. The test program may be configured and may determine the inspection types and thus measurements that are performed by the AOI system. Of course, not all inspection types and thus measurements are performed by the AOI system in a configuration setup - but only the ones configured according to the test program. The inspection types not performed and thus the sections of the feature vector that are not entered or populated with numerical measurement results are left blank or a dummy data, such as NaN, is inserted in those sections. For example, after the dimensionality reduction of the feature vector, the missing input features may be filled with mean values of the numerical measurement results missing. The mean values of the numerical measurement results may be or may have been determine during the training phase based on a training data set, which comprises the necessary numerical measurement results.

In a step S3, input features from the feature vector are selected by dimensionality reduction of the feature vector. As described herein, PCA can be used in order to reduce the dimensionality of the feature vector. The principal component analysis, PCA, performs a linear mapping of the feature vector onto the input features. This can be understood as a selection. Of course, other methods of dimensionality reduction may be employed comprising for example a non-linear kernel.

In a step S4, the input features may be input into a classifier. The classifier, which may be previously trained, is capable of determining an error class of the PCBA based on the input features. The error class may be pseudo error or truer error and may be determine based on the output of the classifier. As mentioned, the output may be a probability which is used for the classification and the assignment of the error class.

In a step S5, the error class may be output as an inspection result of the PCBA. Hence, the inspection result of the AOI system may be replaced by the inspection result of the classifier. This inspection result may thus serve for controlling the PCBA production and/or may be displayed on a display. The operator may then manually inspect the PCBA under test.

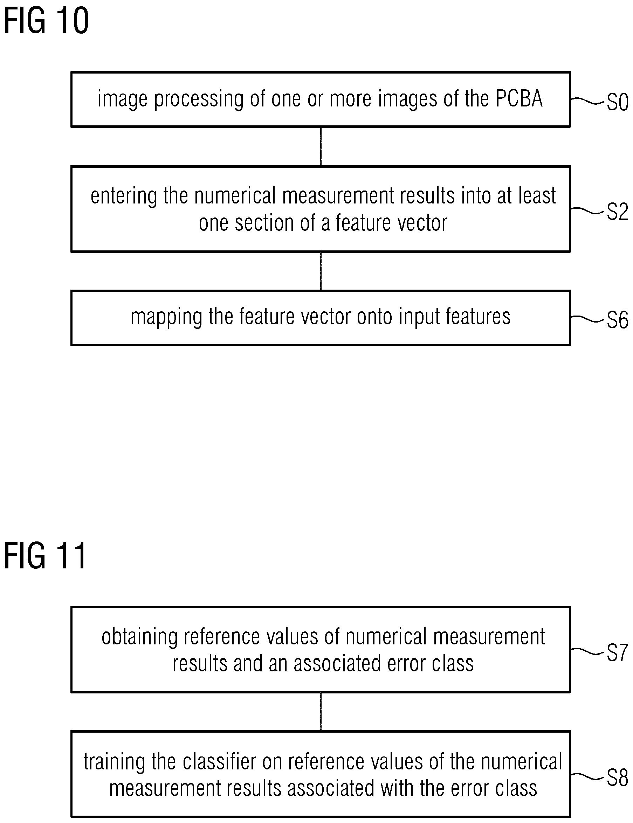

Turning to Figure 10 an illustration of exemplary steps according to a second embodiment is shown. In a step S0, one or more images of the PCBA are processed using image processing. As a result, the numerical measurement results are obtained based on an image processing of one or more images of the PCBA. The image processing may be based on a greyscale comparison of the image pixels, e.g., compared to a golden image. Thereby geometric properties such as length, area, volume or angle, and/or brightness or color of at least one object in one or more images of the PCBA may be obtained as numerical measurement results. As mentioned, these characteristics may be indicative of defects of a PCBA. Step S0 may be performed before step S1. Again, as before, the obtained numerical measurement results are entered into at least one section of the feature vector in a step S2. The numerical measurement results correspond to measurement variables of an inspection type and/or wherein different inspection types comprise different measurement variables. Then in a step S6, which may be part of the step S3 for selecting the input variable from the feature vector, the feature vector is mapped onto input features. Therein, the mapping may be based on a principal component analysis of the feature vector. Then step S4 as described above may follow.

Figure 11 shows an illustration of exemplary steps according to a third embodiment. Therein, in a step S7 reference values of numerical measurement results and/or an associated error class are obtained. These reference values (and/ and/or an associated error class) may be used for training the classifier. Hence, in a step S8, the classifier may be trained (based) on reference values of the numerical measurement results associated with the error class. The training, as described in the above, may comprise a loss function and an optimization function. As a result, a trained classifier is obtained.

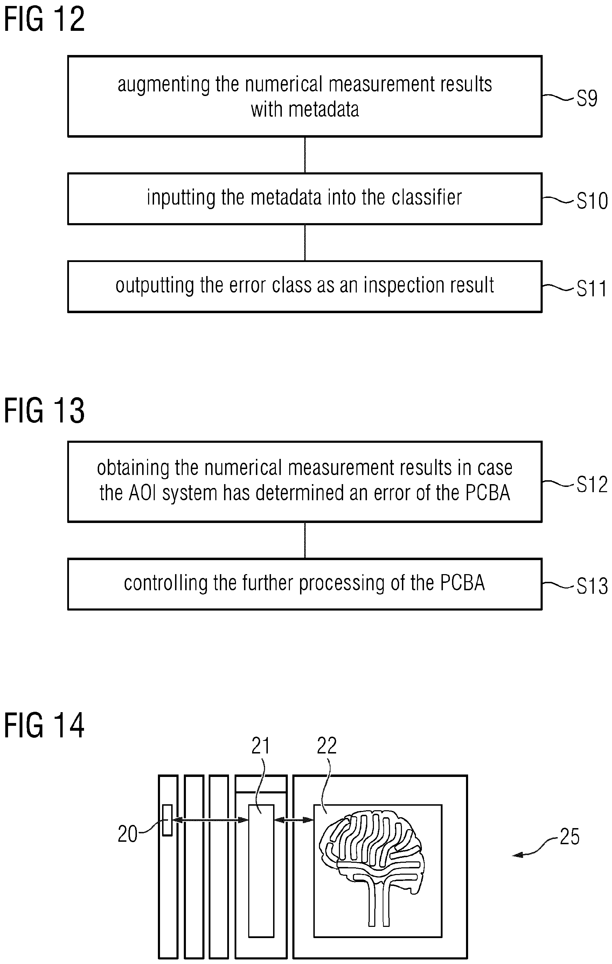

Figure 12 shows an illustration of exemplary steps according to a fourth embodiment. In a step S9, the numerical measurement results are augmented with metadata. For example, they may be stored together or may be otherwise associated. The metadata may relate to one or more components of the PCBA, one or more inspection types and/or an inspection result of the one or more inspection types.

In a step S10, the metadata may be input into the into the classifier. The classifier is capable of determining the error class of the PCBA based on the input features and the metadata. To that end, the classifier may have been previously trained on reference values of the numerical measurement results and the metadata associated with the error class.

Thus, in a step S11, the error class may be output as an inspection result.

Figure 13 shows an illustration of exemplary steps according to a fifth embodiment. In a step S12, the numerical measurement results are obtained, the input features are selected and/or the input features into are input into the classifier (only) in case the AOI system has determined an error of the PCBA.

In A step S13, the further processing of the PCBA may be controlled according to the error class determined by the classifier, e.g., by controlling a conveyor on which the PCBA is placed, based on the inspection result. The error class determined by the classifier indicates a pseudo error or a true error of the inspection by the AOI system.

Figure 14 shows an illustration of an apparatus comprising an interface, as well as a processor and a memory. The interface may be wired or wireless and may be used for exchanging data between the AOI system and the apparatus. The interface may be connected to the data bus according to Figure 1. In any case, the numerical measurement results may be obtained via the interface. For example, the AXI system may generate a file comprising the numerical measurement results. the file may then be obtained by the apparatus. The apparatus may comprise a software application which is executed by the apparatus' processor and memory. The Software application may be based on microservices where each microservice executes a dedicated function. For example, a microservice may execute a single one the steps as described in the above in particular with respect to Figures 9 to 13. Now, the software application may perform the function of the data exporter, the data preprocessor. The software application may also comprise the classifier. The software application may further output or initiate or trigger control commands for controlling a conveyor (belt) and/or may display the inspection result of the classifier on a display. Accordingly, the software application is computer implemented and is operative to perform the steps as described herein, in particular relating to Figure 9 to 13, and preferably using the memory and processor of the apparatus. The apparatus itself may comprise a housing in which the memory and processor are located. the apparatus is preferably external to the AOI system but may also be integrated into the AOI system.

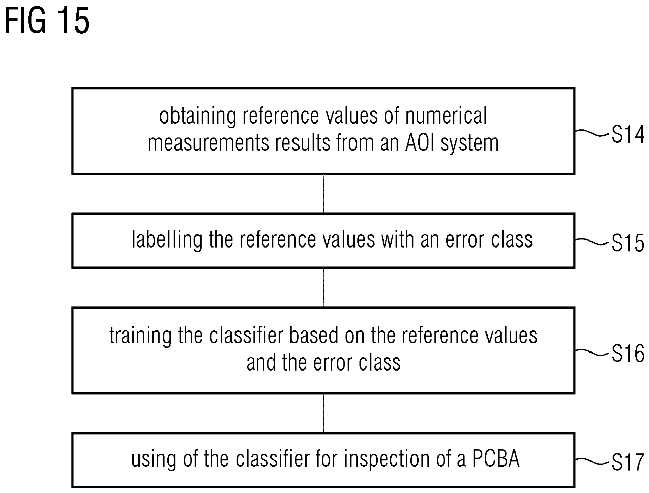

Figure 15 shows an illustration of exemplary steps according to a sixth embodiment. In a step S14, reference values of numerical measurements results are obtained from an AOI system. The reference values may be stored for example in a cloud computing environment in which also the setup of the classifier and the data preprocessor is performed.

In a step S15, the reference values of the numerical measurement results are labelled with an error class. The error class may be obtained by and/or after manually inspecting one or more PCBAs.

In a step S16, the classifier is (re-)trained based on the reference values and the error class by optimizing an optimization function. The optimization function comprising: a slip rate, which is given by the ratio between the following inspection results: false positives on the one hand and true negative and false positives on the other hand, and/or an inspection reduction, which is given by the ratio between the following inspection results: true positives on the one hand and on the other hand true positives and false negatives. As explained in the above in particular in connection with Figure 7, the number of true negative, true positive, false negatives, and false positives may be obtained by the confusion matrix when examining the output of the classifier. As mentioned above, the optimization function may also comprise a punishing factor k.

## Claims

1.  A computer-implemented method of inspecting a printed circuit board assembly (1), PCBA, comprising the steps of:

    obtaining (S1) numerical measurement results (Feat 1, ...Feat n) of one or more inspection types from a plurality of inspection types of an automated optical inspection, AOI, system (10), wherein the numerical measurement results are generated by the AOI system,
    entering (S2) the numerical measurement results into at least one section (a1, a2, an) of a feature vector (FV) associated with the one or more inspection types, the feature vector (FV) comprising a plurality of sections each of which is associated with a respective inspection type from the plurality of inspection types,
    selecting (S3) input features (IF) from the feature vector (FV) by dimensionality reduction of the feature vector (FV), inputting (S4) the input features (IF) into a classifier, wherein the classifier is capable of determining an error class (EC) of the PCBA (1) based on the input features (IF), outputting (S5) the error class (EC) as an inspection result of the PCBA (1).

2.  The method according to the preceding claim, wherein the step of selecting input features (IF) comprises: mapping (S6) the feature vector (FV) onto the input features (IF), wherein preferably the mapping is based on a principal component analysis of the feature vector (FV).

3.  The method according to any one of the preceding claims, wherein the numerical measurement results are obtained based on an image processing (S0) of one or more images of the PCBA (1) .

4.  The method according to any one of the preceding claims, wherein the classifier (60) was previously trained (S8) on reference values of the numerical measurement results associated with the error class (EC).

5.  The method according to the preceding claim, further comprising the step of:

    augmenting (S9) the numerical measurement results with metadata relating to one or more components of the PCBA (1), one or more inspection types and/or an inspection result of the one or more inspection types,
    inputting (S10) the metadata into the classifier (60), wherein the classifier is capable of determining the error class of the PCBA based on the input features and the metadata, and
    wherein the classifier was previously trained on reference values of the numerical measurement results and the metadata associated with the error class, and
    outputting (S11) the error class (EC) as an inspection result.

6.  The method according to any one of the preceding claims, further comprising the step of:

    obtaining numerical measurement results relating to a geometric property, e.g., length, area, volume or angle, and/or
    brightness or color of at least one object in one or more images of the PCBA (1), and/or
    wherein the numerical measurement results correspond to measurement variables of an inspection type and wherein different inspection types comprise different measurement variables.

7. The method according to any one of the preceding claims, further comprising the step of:

obtaining (S12) the numerical measurement results, selecting the input features (IV) and/or inputting the input features into the classifier only in case the AOI system has determined an error of the PCBA, and/or wherein the error class determined by the classifier indicates a pseudo error or a true error of the inspection by the AOI system, and/or controlling (S13) the further processing of the PCBA, e.g., by controlling a conveyor on which the PCBA is placed, based on the inspection result.

8. The method according to any one of the preceding claims, further comprising the step of: obtaining the numerical measurement results from the AOI system (10) after the image processing of one or more images of the PCBA, e.g., according to one or more inspection types of the AOI system (10), is finished.

9. The method according to any one of the preceding claims, wherein a processing time of the numerical measurement results until the inspection result by the classifier is output is shorter than a cycle time between which two subsequent PCBAs are inspected by the AOI system.

10. An apparatus (25) operative to perform the method steps of any one of the previous claims.

11. An apparatus (25) comprising a first interface (20) for obtaining, from an automated optical inspection, AOI, system (10), numerical measurements results, of one or more inspection types from a plurality of inspection types of an automated optical inspection, AOI, system, wherein the numerical measurement results are generated by the AOI system,

the apparatus further comprising a processor (22) and a memory (21) for entering the numerical measurement results into at least one section of a feature vector associated with the one or more inspection types, the feature vector comprising a plurality of sections each of which is associated with a respective inspection type from the plurality of inspection types, for selecting input features from the feature vector by dimensionality reduction of the feature vector, for inputting the input features into a classifier, wherein the classifier is capable of determining an error class of the PCBA based on the input features, and for outputting the error class as an inspection result of the PCBA.

12. Use of the method of claim 1 and/or the apparatus of claim 11 for a follow-up inspection of a PCBA (1) and/or for determining a pseudo error of an AOI system (10).

13. A method of (re-)training a classifier (60) for PCBA inspection, preferably during the production of a plurality of PCBAs,

obtaining (S14) reference values of numerical measurements results from an AOI system, labelling (S15) the reference measurement results with an error class, e.g., after manually inspecting the PCBA (1), and (re-)training (S16) the classifier (60) based on the reference values and the error class (EC) by optimizing a optimization function comprising:

a slip rate, which is given by the ratio between the following inspection results: false positives (FP) on the one hand and true negative (TN) and false positives (FP) on the other hand, and/or an inspection reduction, which is given by the ratio between the following inspection results: true positives (TP) on the one hand and on the other hand true positives (TP) and false negatives (FN).

14. Use (S17) of the classifier (60) as obtained by the method of claim 13 for a follow-up inspection of a PCBA and/or for determining a pseudo error (FP) of an AOI system (10).

# FIG 1

# FIG 2

# FIG 3

PCBA → AOI

FAIL → ML

FAIL → Manual Inspection

PSEUDO-ERROR → Next Production Step

PASS → Next Production Step

# FIG 4

Automated Optical Inspection

10

AOI data of failed boards

False Call Reduction

Industrial Edge

25

Reduced set of failed boards to be inspected

Operator at repair station

Identified false calls

Identified real errors

# FIG 5

FV

| Feat 1 | Feat 2 | ... | Feat n | Feat 1 | ... | Feat m | ... ... | Feat 1 | ... | Feat k |
|--------|--------|-----|--------|--------|-----|--------|---------|--------|-----|--------|
| 1 | 2 | ... | 3 | NaN | ... | NaN | ... ... | NaN | ... | NaN |

Inspection-Type1     Inspection-Type2     Inspection-Type n

a1       a2       an

# FIG 6

Binary Classifier

Input
Features
(IF)

Error
Class
(EC)

60

# FIG 7

Confusion matrix on
pin and board level

|  |  | Predicted |
|---|---|---|
|  | 0 | 1 |
| Actual 0 | TN | FP |
| 1 | FN | TP |

# FIG 8

```
┌──────────┐      ┌──────────┐    ┌──────────┐   ┌──────────┐        ┌──────────┐
│  ▭       │─────▶│   Data   │───▶│ Data pre-│──▶│ Trained  │───────▶│ Conveyer │
│  ▭       │      │ explorter│    │ processor│   │  model   │        │belt action│
└──────────┘      └──────────┘    └──────────┘   └──────────┘   │    └──────────┘
 measurement                                                    │
    file                                                        │    ┌──────────┐
                                                                └───▶│ Operator │
                                                                     │Dashboard │
                                                                     └──────────┘
```

# FIG 9

```
┌────────────────────────────────────────────────────┐
│      obtaining numerical measurement  results       │──── S1
└────────────────────────────────────────────────────┘

┌────────────────────────────────────────────────────┐
│ entering the numerical measurement results into at  │──── S2
│        least one section of a feature vector        │
└────────────────────────────────────────────────────┘

┌────────────────────────────────────────────────────┐
│    selecting input features from the feature vector │──── S3
└────────────────────────────────────────────────────┘

┌────────────────────────────────────────────────────┐
│       inputting the input features into a classifier│──── S4
└────────────────────────────────────────────────────┘

┌────────────────────────────────────────────────────┐
│              outputting the error class             │──── S5
└────────────────────────────────────────────────────┘
```

## FIG 10

| | |
|---|---|
| image processing of one or more images of the PCBA | ∼S0 |
| entering the numerical measurement results into at least one section of a feature vector | ∼S2 |
| mapping the feature vector onto input features | ∼S6 |

## FIG 11

| | |
|---|---|
| obtaining reference values of numerical measurement results and an associated error class | ∼S7 |
| training the classifier on reference values of the numerical measurement results associated with the error class | ∼S8 |

## FIG 12

| augmenting the numerical measurement results with metadata | ~S9 |
| inputting the metadata into the classifier | ~S10 |
| outputting the error class as an inspection result | ~S11 |

## FIG 13

| obtaining the numerical measurement results in case the AOI system has determined an error of the PCBA | ~S12 |
| controlling the further processing of the PCBA | ~S13 |

## FIG 14

# FIG 15

| | |
|---|---|
| obtaining reference values of numerical measurements results from an AOI system | ~S14 |

| | |
|---|---|
| labelling the reference values with an error class | ~S15 |

| | |
|---|---|
| training the classifier based on the reference values and the error class | ~S16 |

| | |
|---|---|
| using of the classifier for inspection of a PCBA | ~S17 |

Europäisches
Patentamt

European
Patent Office

Office européen
des brevets

# EUROPEAN SEARCH REPORT

Application Number

EP 22 16 5506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/380654 A1 (RATNER EDWARD R [US] ET AL) 3 December 2020 (2020-12-03) | 1-12 | INV. G06T7/00 |
| A | * abstract * <br> * paragraphs [0007], [0023], [0024], [0026], [0027], [0029], [0030], [0033] – [0036], [0054], [0055] * | 13,14 | |
| X | GOUMAS S K ET AL: "Combination of multiple classifiers for post-placement quality inspection of components: A comparative study", INFORMATION FUSION, ELSEVIER, US, vol. 11, no. 2, 1 April 2010 (2010-04-01), pages 149-162, XP026864465, ISSN: 1566-2535 [retrieved on 2009-07-01] | 1-12 | |
| A | * abstract; figure 2 * <br> * sections "1. Introduction", "3.1. Optical features", "3.2. Reduced dynamic-range features", "3.3. Reduced input-dimension features", "5.3. Results of combined classifiers using identical pattern representation" * | 13,14 | |

-----

-----

TECHNICAL FIELDS SEARCHED (IPC)

G06T

The present search report has been drawn up for all claims

| Place of search | Date of completion of the search | Examiner |
|---|---|---|
| Munich | 12 September 2022 | Eckert, Lars |

EPO FORM 1503 03.82 (P04C01)

**ANNEX TO THE EUROPEAN SEARCH REPORT
ON EUROPEAN PATENT APPLICATION NO.**

EP 22 16 5506

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2022

| Patent document cited in search report | | Publication date | Patent family member(s) | | Publication date |
|---|---|---|---|---|---|
| US 2020380654 | A1 | 03-12-2020 | CN | 114207624 A | 18-03-2022 |
| | | | KR | 20220015415 A | 08-02-2022 |
| | | | TW | 202107071 A | 16-02-2021 |
| | | | US | 2020380654 A1 | 03-12-2020 |
| | | | WO | 2020242763 A1 | 03-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3941177 A1

- EP 20216995

**Non-patent literature cited in the description**

- A Machine Learning Based Approach to Detect False Calls in SMT Manufacturing. **THIELEN N. ; WERNER D. ; SCHMIDT K. ; SEIDEL R. ; REINHARDT A. ; FRANKE J.** 43rd International Spring Seminar on Electronics Technology. ISSE, 14 May 2020

- *Proceedings of the International Spring Seminar on Electronics Technology,* 2020